(19) Europäisches Patentamt

European Patent Office

Office européen des brevets

(11) **EP 4 726 578 A1**

(12) **EUROPEAN PATENT APPLICATION**

(43) Date of publication:
15.04.2026 Bulletin 2026/16

(21) Application number: 25202813.9

(22) Date of filing: 17.09.2025

(51) International Patent Classification (IPC):
*G06F 18/2135* (2023.01)  *G06V 10/77* (2022.01)
*G06V 10/94* (2022.01)

(52) Cooperative Patent Classification (CPC):
**G06V 10/77; G06F 18/2135; G06V 10/945**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.10.2024 JP 2024176231**

(71) Applicant: **TOYOTA JIDOSHA KABUSHIKI
KAISHA**
**Toyota-shi, Aichi-ken 471-8571 (JP)**

(72) Inventor: **SAEKI, Kazuho**
**Toyota-shi, 471-8571 (JP)**

(74) Representative: **J A Kemp LLP**
**80 Turnmill Street**
**London EC1M 5QU (GB)**

(54) **DISPLAY SYSTEM, DISPLAY METHOD, AND DISPLAY PROGRAM**

(57) A display system, a display method, and a display program capable of facilitating the interpretation of the analysis result of a principal component analysis are provided. A display system according to the present disclosure includes a principal component acquisition unit (112a), a score acquisition unit (112b), a score change receiving unit (113), a reconstructed data output unit (114), a difference evaluation unit (115), and a display control unit (116). The configurations of the principal component acquisition unit (112a), the score acquisition unit (112b), the score change receiving unit (113), the reconstructed data output unit (114), the difference evaluation unit (115), and the display control unit (116) are as described in the specification.

Fig. 3

**Description**

BACKGROUND

The present disclosure relates to a display system, a display method, and a display program.

Patent Literature 1 discloses an information processing apparatus that performs a principal component analysis (PCA) on measurement data of a material. The information processing apparatus disclosed in Patent Literature 1 performs principal component analyses on a plurality of measurement data, and thereby generates principal components (PC) of the plurality of measurement data and principal component values of the principal components. Note that the principal component value is also called a principal component score.

When the information processing apparatus disclosed in Patent Literature 1 displays a generated principal component value of each of a plurality of measurement data on a display screen, it displays a plurality of images respectively representing the principal components of the plurality of measurement data while arranging them diagonally with respect to the horizontal direction or the vertical direction on the display screen.

Then, the information processing apparatus disclosed in Patent Literature 1 displays a graph in which, among the images representing the principal components of the plurality of measurement data, for each of pairs each consisting of a first image and a second image, the principal component value of a respective one of the plurality of measurement data is plotted at a position representing the intersection of a line vertically extending from the first image and a line horizontally extending from the second image.

Patent Literature 1: Japanese Unexamined Patent Application Publication No. 2024-106786

SUMMARY

It should be noted that when it is attempted to interpret the result of a principal component analysis of data to be analyzed, i.e., analysis subject data, it is necessary to understand, for each output principal component, for which area of the analysis subject data the output principal component strongly reflects its feature.

However, it is difficult to intuitively understand, for each principal component output as the result of the analysis, for which area of the data the principal component strongly reflects its feature. Therefore, it is not easy for a user to properly interpret the result of a principal component analysis.

That is, in the principal component analysis of analysis subject data, there is a problem that the interpretation of the result of the analysis becomes difficult due to the fact that a user cannot easily distinguish, for each principal component, a data area in which the feature of the principal component strongly appears.

Patent Literature 1 does not disclose any technology by which such a problem can be solved.

The present disclosure has been made to solve such a problem, and an object thereof is to provide a display system, a display method, and a display program capable of facilitating the interpretation of the analysis result of a principal component analysis.

A display system according to the present disclosure includes a principal component acquisition unit, a score acquisition unit, a score change receiving unit, a reconstructed data output unit, a difference evaluation unit, and a display control unit.

The principal component acquisition unit acquires principal components, the principal components being results of principal component analyses on a plurality of analysis subject data. The score acquisition unit acquires a principal component score of analysis subject data to be displayed. The score change receiving unit receives a change in the principal component score of the analysis subject data to be displayed from a user. The reconstructed data output unit outputs reconstructed data obtained by reconstructing analysis subject data based on a principal component and a changed principal component score. The difference evaluation unit evaluates a difference between the reconstructed data and reference data, the reference data being analysis subject data whose principal component score has not been changed by the user. The display control unit displays at least one of the reconstructed data and the reference data while emphasizing at least a data area in which it has been evaluated that the difference is large.

By the above-described configuration, the user can easily visually recognize, for each principal component, a data area in which a change resulted from a change in the principal component score is large, i.e., a data area in which the feature of the principal component strongly appears. As a result, the display system according to the embodiment can facilitate the interpretation of the analysis result of a principal component analysis.

In the display system according to the present disclosure, the reference data may be reference reconstructed data obtained by reconstructing analysis subject data based on a principal component and a principal component score that has not been changed by the user.

By the above-described configuration, the display system according to the embodiment can evaluate the difference between the reconstructed data and the reference data resulting from the change in the principal component score more appropriately.

In the display system according to the present disclosure, the reference data may be analysis subject data.

By the above-described configuration, the display system according to the embodiment can simplify the processing for displaying the analysis result.

In the display system according to the present disclosure, the display control unit may display at least one of the reconstructed data and the reference data while displaying data areas in different colors based on a result of the evaluation by the difference evaluation unit.

By the above-described configuration, the user can easily visually recognize data areas in which the difference is large.

In the display system according to the present disclosure, the display control unit may superimpose a heat map reflecting magnitude of a difference on at least one of the reconstructed data and the reference data.

By the above-described configuration, the display system according to the present disclosure enables the user to recognize how the data is changed by the change in the principal component score in a more detailed manner.

In the display system according to the present disclosure, the display control unit may not superimpose the heat map in a data area in which the difference is smaller than a predetermined magnitude.

By the above-described configuration, the display system according to the present disclosure can display the analysis result of a principal component analysis in a more simplified manner.

In the display system according to the present disclosure, the principal component acquisition unit may acquire a principal component that is a result of a sparse principal component analysis.

By the above-described configuration, the user can visually recognize, for each principal component, data areas in which the feature of the principal component strongly appears more precisely.

In the display system according to the present disclosure, the display control unit may display the reconstructed data and the reference data while superimposing them with each other.

By the above-described configuration, the user can easily check the difference between the reconstructed data and the reference data.

A display method according to the present disclosure includes the following steps.

Acquiring principal components, the principal components being results of principal component analyses on a plurality of analysis subject data.

Acquiring a principal component score of analysis subject data to be displayed.

Receiving a change in the principal component score of the analysis subject data to be displayed from a user.

Outputting reconstructed data obtained by reconstructing analysis subject data based on a principal component and a changed principal component score.

Evaluating a difference between the reconstructed data and reference data.

Displaying at least one of the reconstructed data and the reference data while emphasizing a data area according to magnitude of the difference.

A non-transitory computer readable medium according to the present disclosure stores a program for causing a computer to perform the following operations.

Acquiring principal components, the principal components being results of principal component analyses on a plurality of analysis subject data.

Acquiring a principal component score of analysis subject data to be displayed.

Receiving a change in the principal component score of the analysis subject data to be displayed from a user.

Outputting reconstructed data obtained by reconstructing analysis subject data based on a principal component and a changed principal component score.

Evaluating a difference between the reconstructed data and reference data.

Displaying at least one of the reconstructed data and the reference data while emphasizing a data area according to magnitude of the difference.

By the present disclosure, it is possible to provide a display system, a display method, and a non-transitory computer readable medium capable of facilitating the interpretation of the analysis result of a principal component analysis.

The above and other objects, features and advantages of the present disclosure will become more fully understood from the detailed description given hereinbelow and the accompanying drawings.

BRIEF DESCRIPTION OF DRAWINGS

Fig. 1 is a block diagram showing a configuration of an analysis system according to a first embodiment;
Fig. 2 is a block diagram showing a hardware configuration of a server according to the first embodiment;
Fig. 3 is a block diagram showing a functional configuration of the server according to the first embodiment;

Fig. 4 is a block diagram showing a functional configuration of the server according to the first embodiment;

Fig. 5 is a schematic diagram for explaining a configuration of a score change receiving unit according to the first embodiment;

Fig. 6 is a schematic diagram for explaining a configuration of a display control unit according to the first embodiment;

Fig. 7 is a flowchart showing operations performed by a display system according to the first embodiment;

Fig. 8 is a schematic diagram for explaining a configuration of a display control unit according to the first embodiment;

Fig. 9 is a schematic diagram for explaining the configuration of the display control unit according to the first embodiment;

Fig. 10 is a schematic diagram for explaining the configuration of the display control unit according to the first embodiment;

Fig. 11 is a schematic diagram for explaining the configuration of the display control unit according to the first embodiment;

Fig. 12 is a block diagram showing a configuration of a display system according to another embodiment; and

Fig. 13 is a block diagram showing a configuration of a display system according to another embodiment.

DESCRIPTION OF EMBODIMENTS

<First Embodiment>

(Configuration of Display System)

A first embodiment according to the present disclosure will be described hereinafter in detail with reference to the drawings. Firstly, a configuration of a display system according to this embodiment will be described in detail.

The display system according to this embodiment is a system configured as a part of an analysis system according to this embodiment, and is a system for displaying the result of an analysis by an analysis system according to this embodiment for a user.

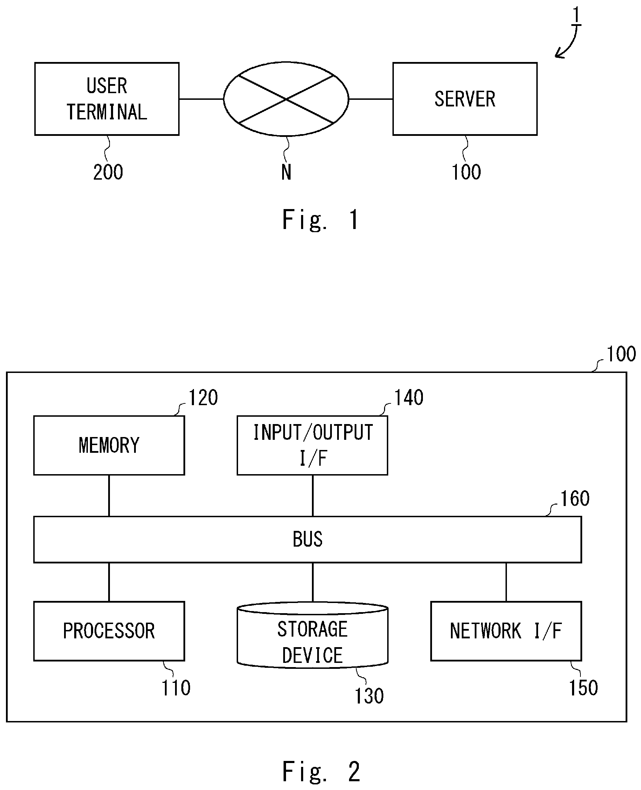

Fig. 1 is a block diagram showing a configuration of an analysis system according to the first embodiment. As shown in Fig. 1, a server 100 and a user terminal 200 are connected to the analysis system 1 according to this embodiment through a network N such as the Internet.

The analysis system 1 is a system for analyzing analysis subject data.

The analysis system 1 according to this embodiment is typically provided as a part of a data cloud-type service used in material development or research and development, and is used as a system for promoting research and development using so-called materials informatics (MI) or data science.

In such a case, the analysis system 1 stores, for example, various measurement data on newly developed materials. Further, the analysis system 1 uses the stored measurement data as analysis subject data as appropriate based on an instruction from a user.

In the analysis system 1, the user terminal 200 transmits analysis subject data to the server 100, and the server 100 analyzes the received analysis subject data. Then, the server 100 transmits the result of the analysis to the user terminal 200, and the user terminal 200 displays the received analysis result.

Note that the analysis subject data in this embodiment is not limited to any particular data, and any data can be used as long as it is data that can be subjected to a principal component analysis.

Examples of analysis subject data analyzed by the analysis system 1 include spectral data, waveform data, graph data, two-dimensional image data, and three-dimensional image data.

Examples of spectrum data include spectral data measured by using nuclear magnetic resonance spectroscopy (NMR), infrared spectroscopy (IR), ultraviolet-visible spectroscopy (UV-vis), X-ray absorption spectroscopy (XAS), Raman spectroscopy, X-ray diffraction (XRD), X-ray small-angle scattering (SAXS), and mass spectrometry (MS).

Further, examples of two-dimensional image data include image data taken by using an optical microscope, a scanning electron microscope (SEM), a transmission electron microscope (TEM), and computed tomography (CT).

Further, examples of three-dimensional image data include photographic data created by stacking tomograms taken by computed tomography (CT) and model data created by CAD (Computer-Aided design) or the like.

Further, examples of wave data include time series data and displacement data. Examples of time series data include acoustic data, vibration data, and transitions of stock prices. Any data of which the numerical value change over time can be subjected to the aforementioned analysis. Examples of displacement data include surface heights and surface profiles of samples. Any data of which the numerical value change as coordinates and other parameters change can be subjected to the aforementioned analysis.

Further, examples of other data include cyclic voltammograms (CV) and chart graphs of gas chromatography (GC).

Further, as the analysis subject data, for example, coordinate data such as a CIF (Crystallographic Information) file or numerical data such as a component table of a composition can be used.

The user terminal 200 according to this embodiment is a terminal operated by a user, and is typically a computer apparatus including a display device.

The user terminal 200 transmits analysis subject data to the server 100 through the network N. Then, the user terminal 200 receives the result of an analysis of the analysis subject data from the server 100 through the network N.

The server 100 according to this embodiment receives the analysis subject data from the user terminal 200 and analyzes the received analysis subject data. Then, the server 100 transmits the analysis result to the user terminal 200 through the network N.

Fig. 2 is a block diagram showing a hardware configuration of a server according to the first embodiment.

As shown in Fig. 2, the server 100 includes a processor 110, a memory 120, a storage device 130, an input/output interface 140, a network interface 150, and an internal bus 160.

The internal bus 160 is a data transmission path through which the processor 110, the memory 120, the storage device 130, the input/output interface 140, and the network interface 150 transmit and receive data to and from each other. However, the method for connecting the processors 110 and the like to each other is not limited to the bus connection.

The memory 120 is a main storage device implemented by using a RAM (Random Access Memory) or the like.

Further, the storage device 130 is an auxiliary storage device implemented by using a hard disk drive, an SSD (Solid State Drive), a memory card, a ROM (Read Only Memory), or the like. The storage device 130 stores programs for implementing desired functions.

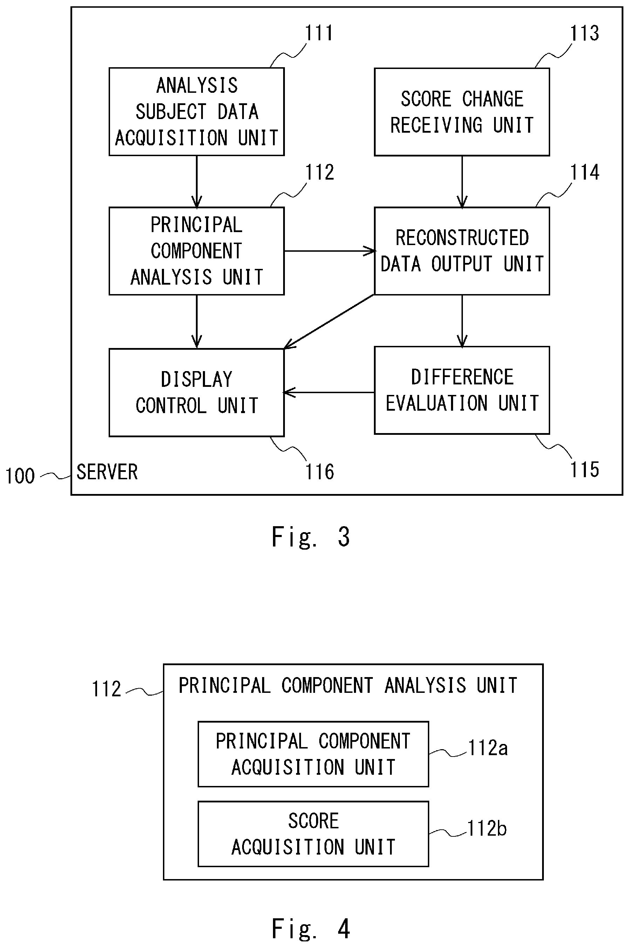

The processor 110 may be any of various processors such as a CPU (Central Processing Unit), a GPU (Graphics Processing Unit), and an FPGA (field-programmable gate array). The processor 110 performs functions of various functional blocks shown in Figs. 3 and 4 described later by loading a program(s) stored in the storage device 130 onto the memory 120 and executing the loaded program(s).

The input/output interface 140 is an interface for connecting the server 100 to input/output devices. For example, an input device such as a keyboard and/or an output device such as a display device may be connected to the input/output interface 140.

The network interface 150 is an interface for connecting the server 100 to the network.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Figs. 3 and 4 are block diagrams showing the functions of the server 100 according to the first embodiment.

As shown in Fig. 3, the server 100 according to this embodiment includes, as its functional blocks, an analysis subject data acquisition unit 111, a principal component analysis unit 112, a score change receiving unit 113, a reconstructed data output unit 114, a difference evaluation unit 115, and a display control unit 116.

Further, as shown in Fig. 4, the principal component analysis unit 112 according to this embodiment includes a principal component acquisition unit 112a and a score acquisition unit 112b.

The analysis subject data acquisition unit 111 acquires a plurality of analysis subject data. More specifically, the analysis subject data acquisition unit 111 according to this embodiment acquires a plurality of analysis subject data from the user terminal 200 through the network N. The analysis subject data acquisition unit 111 outputs the acquired plurality of analysis subject data to the principal component analysis unit 112.

Note that the analysis subject data acquisition unit 111 according to this embodiment does not need to acquire a plurality of analysis subject data by one receiving operation.

For example, the analysis subject data acquisition unit 111 according to this embodiment may acquire a plurality of analysis subject data by acquiring them over a plurality of receiving operations.

In this case, each time the analysis subject data acquisition unit 111 acquires analysis subject data, it stores the acquired analysis subject data in the storage device 130. Then, when a principal component analysis (which will be described later) is performed, a plurality of analysis subject data are read from the storage device 130 and output to the principal component analysis unit 112.

Further, in this case, the analysis subject data acquisition unit 111 does not need to read all the analysis subject data stored in the storage device 130, and instead may read only analysis subject data designated by the user and output the read analysis subject data to the principal component analysis unit 112.

That is, the analysis subject data acquisition unit 111 may create a database in which analysis subject data is stored. Further, the analysis subject data acquisition unit 111 according to this embodiment may be configured so that the user can select data to be subjected to a principal component analysis as appropriate from the created database.

The principal component analysis unit 112 acquires a plurality of analysis subject data from the analysis subject data acquisition unit 111. The principal component analysis unit 112 performs a principal component analysis on the acquired plurality of analysis subject data.

As shown in Fig. 4, the principal component analysis unit 112 includes the principal component acquisition unit 112a and the score acquisition unit 112b.

The principal component acquisition unit 112a acquires principal components which are the results of principal component analyses of the plurality of analysis subject data. The principal component acquisition unit 112a according to this embodiment acquires principal components by performing principal component analyses on the plurality of analysis subject data. In other words, in this embodiment, the principal component acquisition unit 112a acquires principal components of the plurality of analysis subject data by calculating them.

The principal component acquisition unit 112a outputs the acquired principal components to the reconstructed data output unit 114.

For example, the principal component acquisition unit 112a may convert each of a plurality of analysis subject data into vector data. Then, the principal component acquisition unit 112a may perform a principal component analysis on the converted vector data.

Note that in the case where the analysis subject data is spectral data, time-series data, waveform data, or graph data, the principal component acquisition unit 112a can convert the analysis subject data into vector data containing spectral values or measured values as its components.

Further, in the case where the analysis subject data is image data, the principal component acquisition unit 112a can convert the analysis subject data into vector data containing pixel values or the like as its components.

The score acquisition unit 112b acquires principal component scores of analysis subject data to be displayed. More specifically, the score acquisition unit 112b first receives designation of analysis subject data that is to be displayed in the user terminal 200, i.e., analysis subject data to be displayed, from the user. Then, for the analysis subject data to be displayed, a principal component score of each principal component is calculated.

However, the score acquisition unit 112b may calculate not only the principal component scores of the analysis subject data to be displayed, but also those of all the analysis subject data for which the principal component analyses have been performed. Then, the score acquisition unit 112b may store the calculated principal component scores in the storage device 130.

In this case, when the score acquisition unit 112b receives designation of analysis subject data to be displayed from the user, it reads a principal component score(s) corresponding thereto from the storage device 130. Then, the score acquisition unit 112b outputs the read principal component score(s) to the reconstructed data output unit 114 and the display control unit 116.

Note that although the principal component acquisition unit 112a and the score acquisition unit 112b according to this embodiment acquire principal components and principal component scores by calculating them, the configurations of the principal component acquisition unit 112a and the score acquisition unit 112b according to the present disclosure are not limited to those shown in this example.

For example, the principal component acquisition unit 112a and the score acquisition unit 112b according to the present disclosure may acquire principal components and principal component scores from an external apparatus.

The score change receiving unit 113 receives a change in a principal component score from the user. The score change receiving unit 113 outputs the principal component score changed by the user to the reconstructed data output unit 114.

The score change receiving unit 113 may display, for example, a control screen (e.g., a control window) in the user terminal 200 in order to receive a change in a principal component score from the user.

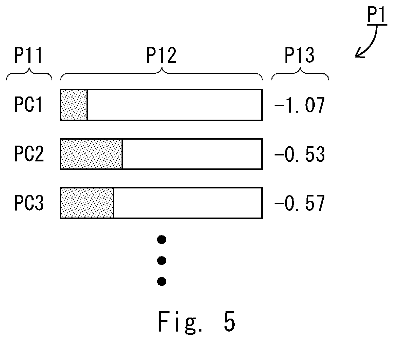

Fig. 5 is a schematic diagram for explaining a configuration of a score change receiving unit according to the first embodiment. More specifically, Fig. 5 shows an example of a control screen (e.g., a control window) displayed in the user terminal 200 in order to receive a change in a principal component score from the user.

As shown in Fig. 5, the score change receiving unit 113 may display, in the user terminal 200, a control screen P1 in which identifiers P11 of principal components, bars P12 indicating the magnitudes of principal component scores, and values P13 of the principal component scores are displayed side by side.

As shown in Fig. 5, as the identifiers P11 of principal components, for example, PC1, PC2 and PC3 are displayed, and they are identifiers representing a first principal component, a second principal component, and a third principal component, respectively.

The bars P12 visually represents the magnitudes of principal component scores corresponding to the identifiers P11 displayed adjacent thereto. Note that the bars P2 are configured so that the magnitudes of the principal component scores can be changed by a dragging operation performed by the user.

The values P13 of the principal component scores indicate the values of the principal component scores corresponding to the identifiers P11 and the bars P12 displayed adjacent thereto. Note that when the magnitude of a principal component score (e.g., one of the principal component scores) is changed by a dragging operation performed on the bar P12 (e.g., a corresponding one of the bars 12), the value P13 (e.g., a corresponding one of the values 13) indicates the changed magnitude of the principal component score.

Further, the values P13 may be configured so that the user can input specific numerical values therein. In this case, the score change receiving unit 113 changes the displayed bars P12 according to the specific numerical values input to the values P13.

The score change receiving unit 113 receives the value of the principal component score changed by the user by operating the bar P12 or the value P13 on the control screen P1 as a principal component score changed by the user.

Fig. 3 will be explained again.

The reconstructed data output unit 114 outputs reconstructed data obtained by reconstructing analysis subject data based on the principal component, which is the result of the principal component analysis, and the principal component score changed by the user. In other words, the reconstructed data output unit 114 outputs simulation data of the analysis subject data of which the principal component score has been changed.

Further, the reconstructed data output unit 114 outputs reference reconstructed data based on the principal component and the principal component score that has not been changed by the user. Although details will be described later, the reference reconstructed data is data for comparison with the reconstructed data described above.

As an example of a method by which the reconstructed data output unit 114 outputs reconstructed data, a case where the analysis subject data is infrared absorption spectrum data will be described.

In this example, it is assumed that each infrared absorption spectrum is obtained by measuring the absorbance of a sample at intervals of 1 cm$^{-1}$ in a measurement range from 400 cm$^{-1}$ to 3,500 cm$^{-1}$, and that the absorbance has already been normalized so that the maximum absorbance of each spectral data becomes 1.

Further, in this example, it is assumed that the principal component analysis unit 112 has already output up to the 10th principal component of the infrared absorption spectrum, which has been subjected to the analysis, and the principal component scores has already been obtained for each of them.

In the above-described case, the reconstructed data output unit 114 may calculate a vector $D^{rec}$ representing the reconstructed data according to, for example, the below-shown Expression (1).

$$D^{rec} = S'_1 v_1 + S'_2 v_2 + \cdots + S'_{10} v_{10} \quad \cdots (1)$$

In the expression,

$S'_k$ is a principal component score of a kth principal component after the change by the user is received, and
$v_k$ is a principal component vector.

Further, the reconstructed data output unit 114 may calculate a vector $D^o$ representing the reference data according to, for example, the below-shown Expression (2).

$$D^o = S^o_1 v_1 + S^o_2 v_2 + \cdots + S^o_{10} v_{10} \quad \cdots (2)$$

In the expression,

$S^o_k$ is a principal component score of a kth principal component before the change by the user is received, and
$v_k$ is a principal component vector.

By the method described above, the reconstructed data output unit 114 can simulate analysis subject data of which the principal component score has been changed.

The method described above can be applied not only to infrared absorption spectra but also to any kind of analysis subject data that can be subjected to a principal component analysis. For example, when the analysis subject data is image data, the above-described method can be applied by converting pixel values or the like included in the image data into vector data as appropriate.

However, the method by which the reconstructed data output unit 114 simulates analysis subject data of which the principal component score has been changed is not limited to the method described above, and any method may be adopted as long as a simulation can be performed within a range that does not deviate from the purpose.

The difference evaluation unit 115 acquires the reconstructed data from the reconstructed data output unit 114. The difference evaluation unit 115 evaluates a difference between the reconstructed data and the reference data. The difference evaluation unit 115 outputs the result of the evaluation of the difference to the display control unit 116.

Note that the difference evaluation unit 115 according to this embodiment uses the reference reconstructed data output from the reconstructed data output unit 114 as the reference data. That is, the difference evaluation unit 115 according to this embodiment uses simulation data which is output based on the principal component and the principal component score that has not been changed by the user as the reference data.

By the above-described configuration, the difference evaluation unit 115 according to this embodiment can evaluate the difference between the reconstructed data and the reference data resulting from the change in the principal component score more appropriately.

However, the data that the difference evaluation unit 115 according to the present disclosure can use as the reference data is not limited to the reference reconstructed data.

For example, the difference evaluation unit 115 according to the present disclosure may use analysis subject data acquired by the analysis subject data acquisition unit 111 as the reference data. That is, the difference evaluation unit 115 according to the present disclosure may use analysis subject data that has not been reconstructed by the reconstructed data output unit 114 as the reference data.

When the analysis subject data is spectral data, the difference evaluation unit 115 may evaluate, for example, a difference between spectral values as the aforementioned difference.

Further, when the analysis subject data is time-series data, waveform data, graph data, or the like, the principal component acquisition unit 112a may evaluate a difference between corresponding measured values as the aforementioned difference.

Further, when the analysis subject data is image data, the difference evaluation unit 115 may evaluate, for example, a difference between pixel values as the aforementioned difference.

Note that the difference evaluation unit 115 may evaluate, as the aforementioned difference, not only the magnitude of the difference between numerical values, but also, for example, the ratio between numerical values, the ratio of change, or the like.

For example, the difference evaluation unit 115 may evaluate a difference between the reconstructed data and the reference data by outputting the difference between the reconstructed data and the reference data as numerical data.

Alternatively or additionally, the difference evaluation unit 115 may evaluate a difference between the reconstructed data and the reference data by comparing the difference between the reconstructed data and the reference data with a predetermined threshold.

The display control unit 116 acquires the result of the evaluation of the difference from the difference evaluation unit 115. The display control unit 116 displays at least one of the reconstructed data and the reference data while emphasizing a data area(s) according to the magnitude of the difference.

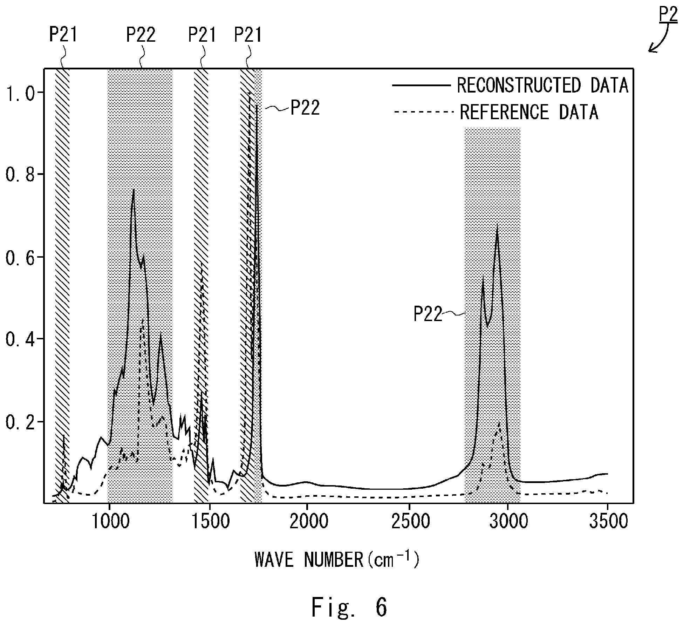

Fig. 6 is a schematic diagram for explaining the configuration of the display control unit according to the first embodiment. More specifically, Fig. 6 is a schematic diagram showing an example of the configuration of a display screen (e.g., a display window) that the display control unit 116 according to this embodiment displays in the user terminal 200. Note that Fig. 6 shows an example of a display screen when the analysis subject data is an infrared absorption spectrum.

As shown in Fig. 6, the display control unit 116 displays reconstructed data and reference data on a display screen P2 while superimposing them with each other. Note that in the display screen P2, the reconstructed data is indicated by a solid line, and the reference data is indicated by a broken line.

As shown in Fig. 6, the display control unit 116 according to this embodiment displays data areas in each of which the difference between the reconstructed data and the reference data is large in an emphasized manner.

More specifically, the display control unit 116 according to this embodiment displays the reconstructed data and the reference data while displaying data areas in different colors based on the result of the evaluation by the difference evaluation unit. That is, the display control unit 116 according to this embodiment emphasizes data areas in each of which the difference is large by displaying them in different colors.

By the above-described configuration, the user can easily visually recognize, for each principal component, the area where the change in the data resulting from the change in the principal component score is large, i.e., the data area in which the feature of the principal component strongly appears. As a result, the display system implemented as the server 100 according to this embodiment can facilitate the interpretation of the analysis result of the principal component analysis.

Specifically, the display control unit 116 according to this embodiment displays a spectrum chart showing the reconstructed data, a spectrum chart showing the reference data, and coloring images P21 and P22 while superimposing them with each other.

The coloring images P21 and P22 are superimposed in data areas in each of which the difference between the reconstructed data and the reference data is equal to or larger than a predetermined threshold, and they color the data areas in colors different from each other. The coloring image P21 is superimposed in data areas in each of which the spectrum value of the reconstructed data is smaller than that of the reference data, and the coloring image P22 is superimposed in data areas in each of which the spectrum value of the reconstructed data is larger than that of the reference data.

By the above-described configuration, the user can recognize how the data is changed by the change in the principal component score in detail. As a result, the server 100 according to this embodiment can assist the user or the like to interpret the analysis result of the principal component analysis more precisely.

(Operation of Display System)

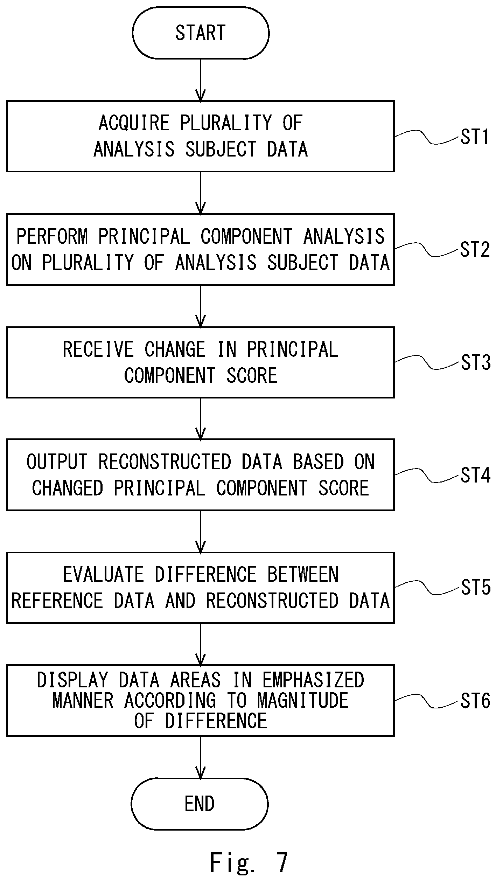

Next, the operation of the display system, i.e., a display method according to the first embodiment, will be described in detail. Fig. 7 is a flowchart showing operations performed by the display system according to the first embodiment. Note that in the following description, Figs. 1 to 6 will be referred to as appropriate.

In the processing procedure shown in Fig. 7, the processor 110 of the server 100 functions as the analysis subject data acquisition unit 111, the principal component analysis unit 112, the score change receiving unit 113, the reconstructed data output unit 114, the difference evaluation unit 115, and the display control unit 116 by loading a program(s) stored in the storage device 130 onto the memory 120 and executing the loaded program(s).

In the display method according to this embodiment, first, the processor 110 acquires a plurality of analysis subject data (Step ST1). That is, in the step ST1, the processor 110 functions as the analysis subject data acquisition unit 111.

For example, in the step ST1, the processor 110 receives a choice of analysis subject data to be analyzed from the user terminal 200. Then, the processor 110 acquires the selected plurality of analysis subject data from the storage device 130.

Next, the processor 110 performs principal component analyses on the plurality of analysis subject data (Step ST2). That is, in the step ST2, the processor 110 functions as the principal component analysis unit 112.

More specifically, in the step ST2, the processor 110 performs principal component analyses on a plurality of analysis subject files acquired in the step ST1, and thereby acquires principal components thereof. Further, in the step ST2, the processor 110 acquires principal component scores of the analysis subject data.

However, the timing at which the processor 110 acquires principal component scores is not limited to the step ST2. For example, the processor 110 may calculate and acquire principal component scores of the analysis subject data to be displayed in the step ST3.

Next, the processor 110 receives a change(s) in a principal component score(s) from a user (Step ST3). That is, in the step ST3, the processor 110 functions as the score change receiving unit 113.

More specifically, in the step ST3, the processor 110 displays the principal component scores acquired in the step ST2 for the user. Then, by receiving a change operation for the displayed principal component scores from the user, the processor 110 receives a change(s) in a principal component score(s).

Next, the processor 110 outputs reconstructed data based on the changed principal component score (Step ST4). That is, in the step ST4, the processor 110 functions as the reconstructed data output unit 114.

Note that the processor 110 according to this embodiment outputs reference reconstructed data. The timing at which the reference reconstructed data is output is not limited to any particular timing, and may be performed at any timing between the end of the step ST2 and the start of a step ST5 described later.

Next, the processor 110 evaluates a difference between the reference data and the reconstructed data (Step ST5). That is, in the step ST2, the processor 110 functions as the difference evaluation unit 115.

Lastly, the processor 110 displays data areas in an emphasized manner according to the magnitude of the difference (Step ST6), and the server 100 according to this embodiment finishes the series of operations. That is, in the step ST6, the processor 110 functions as the display control unit 116.

More specifically, in the step ST6, the processor 110 makes (e.g., instructs) the user terminal 200 display, for example, a display screen P2 like that one shown in Fig. 6.

As described above, the display system according to this embodiment is implemented as the server 100. The display system according to this embodiment outputs the reconstructed data based on the principal components of the analysis subject data and the principal component scores changed by the user. Then, the display system displays the reconstructed data and the reference data while emphasizing data areas in each of which the difference between the reconstructed data and the reference data is large.

By the above-described configuration, the user can easily recognize, for each principal component, a data area in which a change resulted from a change in the principal component score is large, i.e., a data area in which the feature of the principal component strongly appears. As a result, the display system according to the embodiment can facilitate the interpretation of the analysis result of the principal component analysis.

<Modification Example>

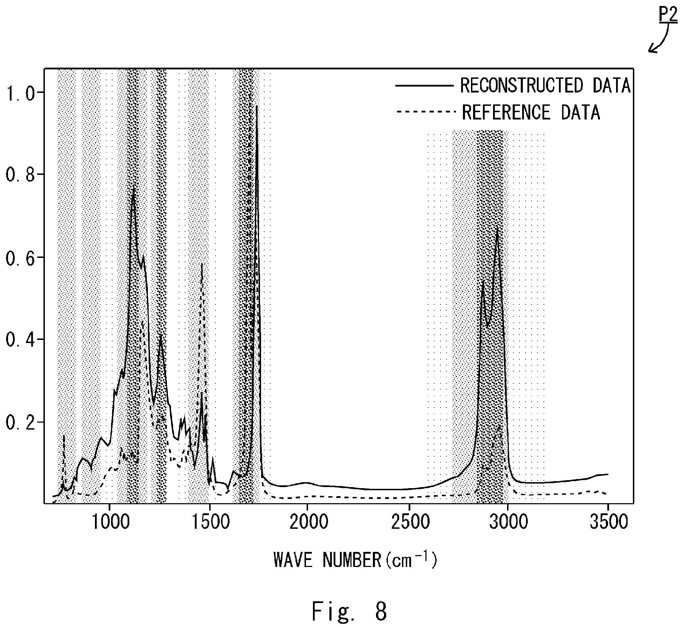

Figs. 8 to 11 are schematic diagrams for explaining the configuration of the display control unit according to the first embodiment. More specifically, Figs. 8 to 11 are schematic diagrams showing modified examples of the configuration on the display screen that the display control unit 116 according to this embodiment displays in the user terminal 200. Note that Figs. 8 to 11 show examples of display screens when the analysis subject data is an infrared absorption spectrum as in the case shown in Fig. 6.

(Modified Example 1)

For example, as shown in Fig. 8, the display control unit 116 according to this embodiment may superimpose a heat map reflecting magnitudes of differences on at least one of the reconstructed data and the reference data.

That is, the display control unit 116 according to this embodiment may emphasize data areas by superimposing a heat map in which the color changes in a continuous manner according to the magnitude of the difference.

Note that in the heat map shown in Fig. 8, data areas are displayed in different colors in such a manner that the color becomes darker as the difference between the reconstructed data and the reference data increases.

By the above-described configuration, the user can recognize the magnitude of the change in data resulting from the change in the principal component score in a more detailed manner. As a result, the server 100 according to this embodiment can assist the user or the like to interpret the analysis result of the principal component analysis more precisely.

Further, the display control unit 116 according to this embodiment may, for example, superimpose a heat map in which the larger the reconstructed data is compared with the reference data, the warmer the color becomes, and the smaller the reconstructed data is compared with the reference data, the cooler the color becomes.

By the above-described configuration, the user can recognize how the data is changed by the change in the principal component score in a more detailed manner. As a result, the server 100 according to this embodiment can assist the user or the like to interpret the analysis result of the principal component analysis more precisely.

Further, the display control unit 116 according to this embodiment may not superimpose the heat map in data areas in each of which the difference is smaller than a predetermined magnitude.

By the above-described configuration, the server 100 according to this embodiment can simplify the screen (e.g., a window) displayed for the user. As a result, the server 100 according to this embodiment can display the analysis result of the principal component analysis in a more easy-to-recognize manner.

(Modified Example 2)

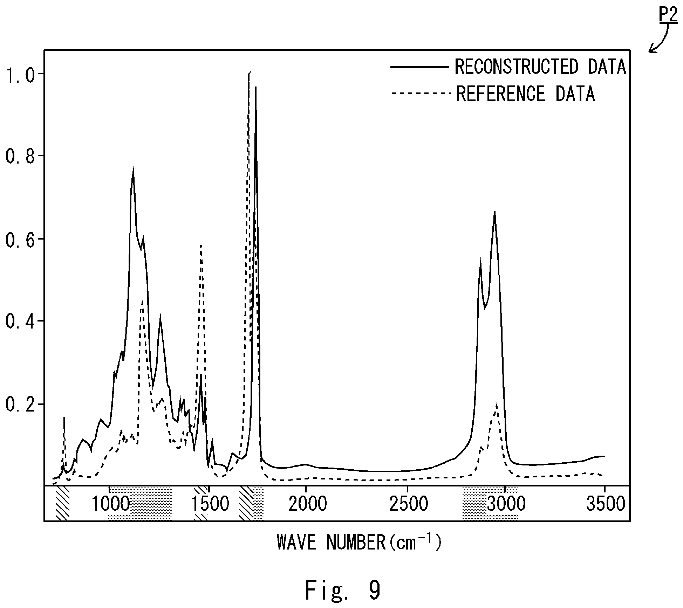

Further, for example, as shown in Fig. 9, the display control unit 116 according to this embodiment may superimpose coloring images on the scale part indicating the data area. That is, the display control unit 116 according to this embodiment may emphasize data areas by displaying the scale part using different colors.

Even by the above-described configuration, the user can easily visually recognize, for each principal component, data areas in each of which the feature of the principal component strongly appears.

(Modified Example 3)

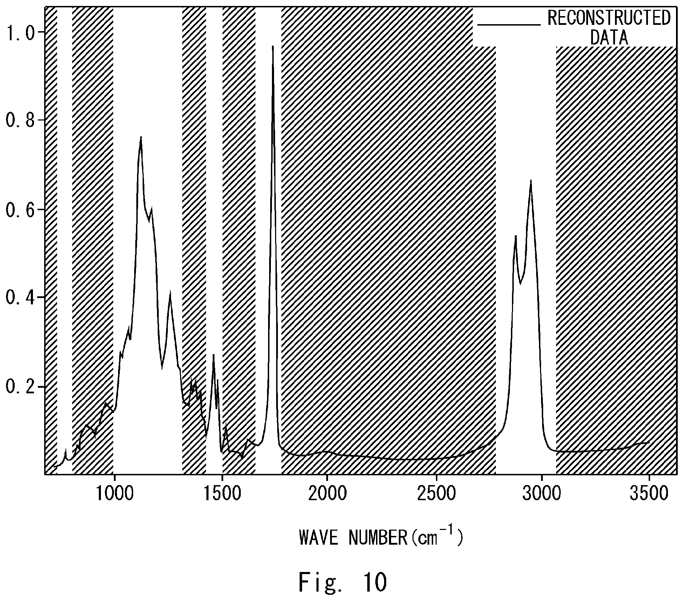

Further, for example, as shown in Fig. 10, the display control unit 116 according to this embodiment may superimpose a coloring image for lowering the visibility in areas in each of which the difference between the reconstructed data and the reference data is small.

That is, the display control unit 116 according to this embodiment may lower, for each principal component, the visibility in data areas in each of which the feature of the principal component does not strongly appear, and by doing so, display data areas in each of which the feature of the principal component strongly appears in a relatively emphasized manner.

Even by the above-described configuration, the user can easily visually recognize, for each principal component, data areas in each of which the feature of the principal component strongly appears.

(Modified Example 4)

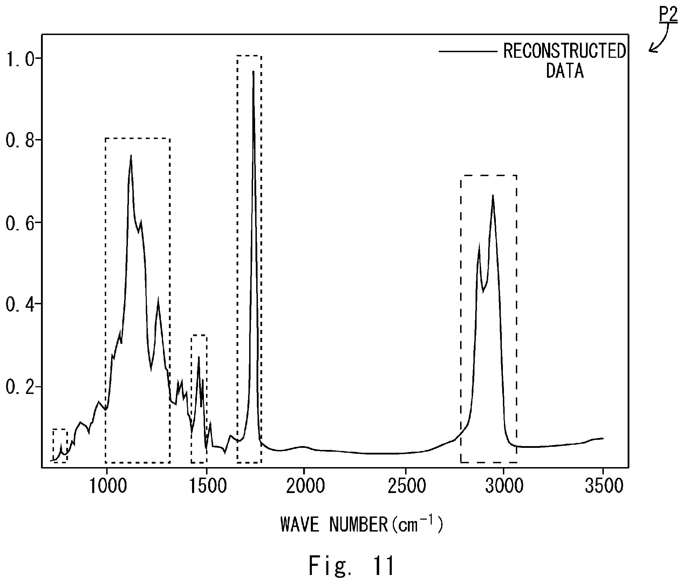

Further, for example, as shown in Fig. 11, the display control unit 116 according to this embodiment may superimpose frame-like images in data areas in each of which the difference between the reconstructed data and the reference data is larger than a predetermined threshold. That is, the display control unit 116 according to this embodiment may emphasize, for each principal component, data areas in each of which the feature of the principal component strongly appears by surrounding each of them with a frame.

Even by the above-described configuration, the user can easily visually recognize, for each principal component, data areas in each of which the feature of the principal component strongly appears.

(Modified Example 5)

Note that in this embodiment, the principal component acquisition unit 112a and the score acquisition unit 112b may acquire principal components and principal component scores by analyzing a plurality of analysis subject data by a sparse principal component analysis.

When the principal components and principal component scores are acquired by the sparse principal component analysis, it is possible to, for each principal component, reduce the contribution of variables that do not reflect the feature of the principal component. In this case, for each principal component, the difference between the reconstructed data and the reference data reflects the feature of the principal component more prominently, and as a result, the user can visually recognize data areas in each of which the feature of the principal component strongly appears more precisely.

<Other Embodiments>

The display system according to the first embodiment is implemented as the server 100, but the configuration of the display system according to the present disclosure is not limited to this example. For example, the display system according to the present disclosure may be implemented by two or more computer apparatuses.

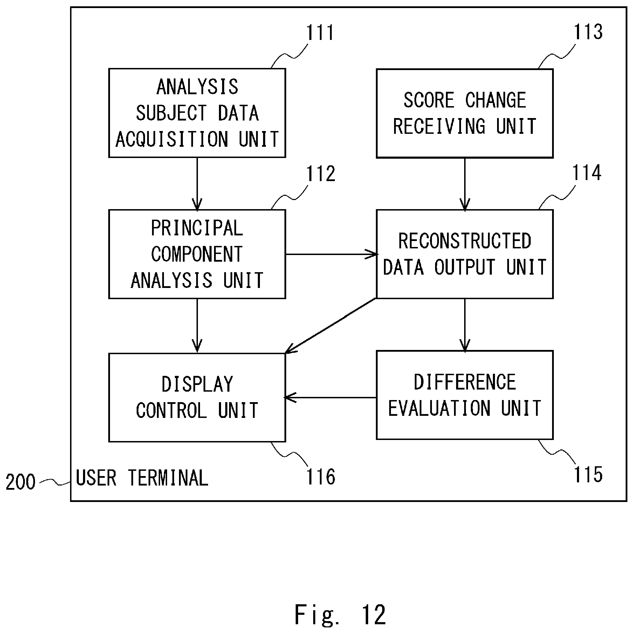

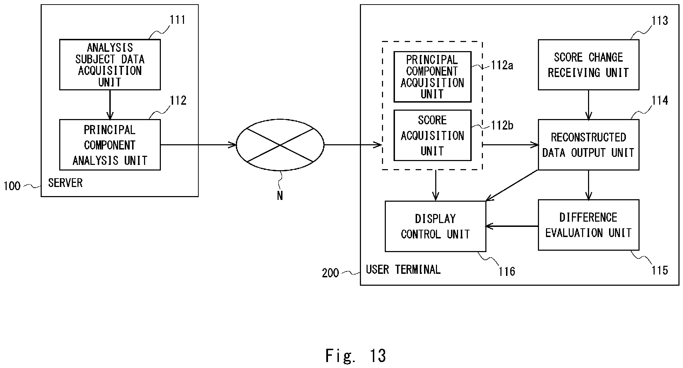

Figs. 12 and 13 are block diagrams showing configurations of display systems according to other embodiments. More specifically, Figs. 12 and 13 are block diagrams showing examples in each of which a display system according to the present disclosure is implemented by an apparatus configuration different from that of the first embodiment.

For example, a display system according to the present disclosure may be implemented by an apparatus configuration shown in Fig. 12. That is, the display system according to the present disclosure may be implemented by an apparatus configuration in which a user terminal 200 includes an analysis subject data acquisition unit 111, a principal component analysis unit 112, a score change receiving unit 113, a reconstructed data output unit 114, a difference evaluation unit 115, and a display control unit 116.

In this case, the user terminal 200 may include various processors such as a CPU (Central Processing Unit), a GPU (Graphics Processing Unit), or an FPGA (Field-Programmable Gate Array), a memory implemented using a RAM (Random Access Memory), and a storage device implemented using a hard disk drive, an SSD (Solid State Drive), a memory card, or a ROM (Read Only Memory). Further, the processor may perform the functions of the analysis subject data acquisition unit 111, the principal component analysis unit 112, the score change receiving unit 113, the reconstructed data output unit 114, the difference evaluation unit 115, and the display control unit 116 by loading a program(s) stored in the storage device onto the memory and executing the loaded program(s).

Alternatively, the display system according to the present disclosure may be implemented by an apparatus configuration shown in Fig. 13. That is, the display system according to the present disclosure may be implemented by an apparatus configuration in which a server 100 includes an analysis subject data acquisition unit 111 and a principal component analysis unit 112, and a user terminal 200 includes a principal component acquisition unit 112a, a score acquisition unit 112b, a score change receiving unit 113, a reconstructed data output unit 114, a difference evaluation unit 115, and a display control unit 116.

In this case, the server 100 performs a principal component analysis for a plurality of analysis subject data, and transmits principal components and principal component scores, which are the analysis results, to the user terminal.

Then, the user terminal 200 outputs reconstructed data based on the received principal components and principal component scores, and displays the reconstructed data and the reference data while emphasizing data areas according to the magnitude of the difference between the reconstructed data and the reference data.

In this case, the principal component acquisition unit 112a acquires the principal components by receiving them from the server 100 without performing the principal component analysis. Further, the score acquisition unit 112b also acquires the principal component scores by receiving them from the server 100.

The display system according to the present disclosure can also be implemented even by the above-described configurations.

Although the present disclosure has been described with the above-described embodiments, the present disclosure is not limited to the configurations of the above-described embodiments. Further, the present disclosure includes various modifications, corrections, and combinations that can be made by a person skilled in the art within the scope of the invention specified in the claims of the present disclosure.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

**Claims**

1. A display system comprising:

a principal component acquisition unit (112a) configured to acquire principal components, the principal components being results of principal component analyses on a plurality of analysis subject data;
a score acquisition unit (112b) configured to acquire a principal component score of the analysis subject data to be displayed;
a score change receiving unit (113) configured to receive a change in the principal component score of the analysis subject data to be displayed from a user;
a reconstructed data output unit (114) configured to output reconstructed data obtained by reconstructing analysis subject data based on the principal component and the changed principal component score;
a difference evaluation unit (115) configured to evaluate a difference between the reconstructed data and reference data; and
a display control unit (116) configured to display at least one of the reconstructed data and the reference data while emphasizing a data area according to magnitude of the difference.

2. The display system according to claim 1, wherein the reference data is reference reconstructed data obtained by reconstructing analysis subject data based on the principal component and the principal component score that has not been changed by the user.

3. The display system according to claim 1, wherein the reference data is analysis subject data.

4. The display system according to any one of claims 1 to 3, wherein the display control unit (116) displays at least one of the reconstructed data and the reference data while displaying the data areas in different colors according to a result of the evaluation by the difference evaluation unit (115).

5. The display system according to claim 4, wherein the display control unit (116) superimposes a heat map reflecting magnitude of the difference on at least one of the reconstructed data and the reference data.

6. The display system according to claim 5, wherein the display control unit (116) does not superimpose the heat map in a data area in which the difference is smaller than a predetermined magnitude.

7. The display system according to any one of claims 1 to 3, wherein the principal component acquisition unit (112a) acquires a principal component that is a result of a sparse principal component analysis.

8. The display system according to any one of claims 1 to 3, wherein the display control unit (116) displays the reconstructed data and the reference data while superimposing them with each other.

9. A display method comprising:

acquiring principal components, the principal components being results of principal component analyses on a plurality of analysis subject data;
acquiring a principal component score of the analysis subject data to be displayed;
receiving a change in the principal component score of the analysis subject data to be displayed from a user;
outputting reconstructed data obtained by reconstructing analysis subject data based on the principal component and the changed principal component score;
evaluating a difference between the reconstructed data and reference data; and
displaying at least one of the reconstructed data and the reference data while emphasizing a data area according to magnitude of the difference.

10. A display program for causing a computer to:

acquire principal components, the principal components being results of principal component analyses on a plurality of analysis subject data;
acquire a principal component score of the analysis subject data to be displayed;
receive a change in the principal component score of the analysis subject data to be displayed from a user;
output reconstructed data obtained by reconstructing analysis subject data based on the principal component

## EP 4 726 578 A1

and the changed principal component score;
evaluate a difference between the reconstructed data and reference data; and
display at least one of the reconstructed data and the reference data while emphasizing a data area according to magnitude of the difference.

USER
TERMINAL

SERVER

200

N

100

1

Fig. 1

100

120

MEMORY

140

INPUT/OUTPUT
I/F

160

BUS

PROCESSOR

STORAGE
DEVICE

NETWORK I/F

110

130

150

Fig. 2

Fig. 3

Fig. 4

P1

P11    P12    P13

PC1    ▨ ▢    −1.07

PC2    ▨ ▢    −0.53

PC3    ▨ ▢    −0.57

●
●
●

Fig. 5

Fig. 6

START

↓

| ACQUIRE PLURALITY OF ANALYSIS SUBJECT DATA | ST1 |

↓

| PERFORM PRINCIPAL COMPONENT ANALYSIS ON PLURALITY OF ANALYSIS SUBJECT DATA | ST2 |

↓

| RECEIVE CHANGE IN PRINCIPAL COMPONENT SCORE | ST3 |

↓

| OUTPUT RECONSTRUCTED DATA BASED ON CHANGED PRINCIPAL COMPONENT SCORE | ST4 |

↓

| EVALUATE DIFFERENCE BETWEEN REFERENCE DATA AND RECONSTRUCTED DATA | ST5 |

↓

| DISPLAY DATA AREAS IN EMPHASIZED MANNER ACCORDING TO MAGNITUDE OF DIFFERENCE | ST6 |

↓

END

Fig. 7

Fig. 8

Fig. 9

Fig. 10

Fig. 11

111

ANALYSIS
SUBJECT DATA
ACQUISITION UNIT

113

SCORE CHANGE
RECEIVING UNIT

112

PRINCIPAL
COMPONENT
ANALYSIS UNIT

114

RECONSTRUCTED
DATA OUTPUT UNIT

DISPLAY
CONTROL UNIT

DIFFERENCE
EVALUATION UNIT

200 USER TERMINAL

116

115

Fig. 12

Fig. 13

Europäisches
Patentamt

European
Patent Office

Office européen
des brevets

# EUROPEAN SEARCH REPORT

**Application Number**

EP 25 20 2813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAVALLO MARCO ET AL: "A Visual Interaction Framework for Dimensionality Reduction Based Data Exploration", PROCEEDINGS OF THE 39TH ACM SIGPLAN CONFERENCE ON PROGRAMMING LANGUAGE DESIGN AND IMPLEMENTATION, SOCIETY FOR COMPUTER SIMULATION INTERNATIONALPUB1344, SAN DIEGO, CA, USA, 21 April 2018 (2018-04-21), pages 1-13, XP059206311, DOI: 10.1145/3173574.3174209 ISBN: 978-1-5108-6016-2 | 1,3-7,9, 10 | INV. G06F18/2135 G06V10/77 G06V10/94 |
| Y | * "Abstract"; | 8 | |
| A | page 1 * * page 1; figure 1 * * page 4; figure 4 * * Section "Backward Projection"; page 4 * * Section "Applications"; page 5 * * Section "Application 1: PCA"; page 5 - page 6 * * page 6; figure 7 * * Section "Feasibility map: Visualizing Constraint Satisfaction"; page 4 - page 5 * ----- | 2 | |
| Y | DAVID WINANT ET AL: "Latent Space Exploration Using Generative Kernel PCA", ARXIV.ORG, CORNELL UNIVERSITY LIBRARY, 201 OLIN LIBRARY CORNELL UNIVERSITY ITHACA, NY 14853, 28 May 2021 (2021-05-28), XP081971441, * page 9; figure 9 * ----- -/-- | 8 | |

**TECHNICAL FIELDS SEARCHED (IPC)**

G06F
G06V

The present search report has been drawn up for all claims

| Place of search | Date of completion of the search | Examiner |
|---|---|---|
| The Hague | 25 November 2025 | Gissot, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 20 2813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2024 106977 A (TOYOTA MOTOR CORP) 8 August 2024 (2024-08-08) * paragraph [0014] - paragraph [0017] * * paragraph [0025] * * paragraph [0029] - paragraph [0030] * * paragraph [0031] * * paragraph [0047] * ----- | 1-10 | |
| A | JP 2015 017971 A (CANON KK) 29 January 2015 (2015-01-29) * paragraph [0067] - paragraph [0069] * ----- | 1-10 | |
| | | | **TECHNICAL FIELDS SEARCHED (IPC)** |

The present search report has been drawn up for all claims

| Place of search | Date of completion of the search | Examiner |
|---|---|---|
| The Hague | 25 November 2025 | Gissot, Samuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 20 2813

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | Publication date | Patent family member(s) | Publication date |
|---|---|---|---|
| JP 2024106977 A | 08-08-2024 | NONE | |
| JP 2015017971 A | 29-01-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024106786 A